# FASCICULE DE BREVET EUROPEEN

(11) **EP 3 917 808 B1**
(45) Date de publication et mention de la délivrance du brevet: **28.02.2024**
(21) Numéro de dépôt: 20705434.7
(22) Date de dépôt: 23.01.2020
(51) Int. Cl.: B60R 21/02

(54) **DISPOSITIF DE PROTECTION POUR UN VÉHICULE, À GRILLE DE PROTECTION INCLINÉE VERS L'ARRIÈRE**
SCHUTZVORRICHTUNG FÜR EIN FAHRZEUG MIT NACH HINTEN GENEIGTEM SCHUTZGITTER
PROTECTION DEVICE FOR A VEHICLE, WITH PROTECTION GRATING INCLINED TOWARDS THE REAR

(30) Priorité: 29.01.2019 FR 1900758
(43) Date de publication de la demande: 08.12.2021
(73) Titulaire: Stellantis Auto SAS, 78300 Poissy (FR)
(72) Inventeur: BENANE, Said, 94240 L HAY LES ROSES (FR)
(86) Numéro de dépôt international: PCT/FR2020/050095
(87) Numéro de publication internationale: WO 2020/157411

(56) Documents cités:
- EP-A1- 2 913 231
- WO-A1-2013/140053
- FR-A1- 3 007 090
- GB-A- 1 588 291
- US-A- 4 621 856

## Description

### Domaine technique de l'invention

La présente invention revendique la priorité de la demande française 1900758 déposée le 29 Janvier 2019.

L'invention concerne les véhicules, éventuellement de type utilitaire, et plus précisément les dispositifs de protection qui équipent de tels véhicules.

### Etat de la technique

Certains véhicules, souvent de type utilitaire, comprennent une structure qui délimite un espace arrière et un espace avant se prolongeant mutuellement, et éventuellement de longueurs complémentaires et modulables. On entend ici par « espace avant » un espace logeant au moins un siège (par exemple de rang un ou deux), et par « espace arrière » un espace prolongeant l'espace avant vers l'arrière et destiné à loger au moins un objet. On comprendra que l'espace arrière peut donc être un espace fonctionnel (éventuellement de travail), notamment dans le cas d'un véhicule utilitaire, ou un espace de rangement, comme par exemple un coffre dans le cas d'un véhicule monospace ou d'un véhicule métis (ou « crossover ») ou encore d'un véhicule de loisir bicorps (ou SUV).

Afin de réduire la consommation d'énergie des véhicules définis ci-avant, il a notamment été proposé de réduire leur poids. Pour ce faire, on peut, par exemple, modifier la structure du (des) siège(s) qui est (sont) situé(s) dans l'espace avant juste avant l'espace arrière.

Cette solution s'avère efficace en termes de consommation, mais dans le même temps elle induit une réduction de la capacité de la structure du siège à supporter (ou tenir) les efforts en cas de collision avec un objet qui est logé dans l'espace arrière du véhicule. Afin de protéger le(s) siège(s) on peut installer transversalement derrière lui (eux), dans un plan défini à partir des directions verticale et transversale du véhicule, une grille de protection, à l'interface entre les espaces arrière et avant. Cette grille de protection est généralement en acier, et pour qu'elle demeure suffisamment légère elle comprend habituellement un cadre auquel est solidarisé un maillage. Cependant, ce type de protection s'avère insuffisant lorsque le poids des objets devient relativement important, typiquement supérieur à 15 kg, et/ou la vitesse d'impact des objets devient relativement importante.

L'invention a donc notamment pour but d'améliorer la situation.

### Présentation de l'invention

Elle propose notamment à cet effet un dispositif de protection, d'une part, destiné à équiper un véhicule comprenant une structure délimitant un espace arrière et un espace avant comportant au moins un siège, et, d'autre part, comprenant une grille principale de protection destinée à être solidarisée à la structure transversalement derrière le siège, à une interface entre les espaces arrière et avant.

Ce dispositif de protection se caractérise par le fait que le dispositif (1) comprend au moins une patte de renfort (12) comprenant 15 une extrémité avant (13) destinée à être solidarisée à une partie supérieure de ladite structure (3) et une extrémité arrière (14) solidarisée fixement à une extrémité supérieure (15) de ladite grille principale de protection (6), et propre à encaisser par déformation une partie de l'énergie de ladite collision.

Cette inclinaison vers l'arrière de la grille principale de protection permet avantageusement à cette dernière d'encaisser des chocs plus importants avec des objets, car l'énergie à encaisser dans le plan incliné est inférieure à celle que l'on aurait dans le plan vertical en raison de l'effet de projection.

Le dispositif de protection selon l'invention peut comporter d'autres caractéristiques qui peuvent être prises séparément ou en combinaison, et notamment :
- il peut comprendre deux pattes de renfort ayant leurs extrémités avant destinées à être solidarisées à la partie supérieure de la structure de façon symétrique par rapport à une direction longitudinale médiane du véhicule ;
- chaque patte de renfort peut comprendre une plaque transversale destinée à être installée dans un plan transversal du véhicule et participant à son extrémité arrière, et deux plaques longitudinales destinée à être installées parallèlement dans deux plans longitudinaux du véhicule et comprenant chacune une première extrémité solidarisée à la plaque transversale et une seconde extrémité participant à son extrémité avant ;
   > la partie supérieure de la grille principale de protection peut comprendre au niveau d'une extrémité supérieure au moins un décrochement vers le bas dans lequel est solidarisée la plaque transversale d'une patte de renfort correspondante ;
- la grille principale de protection peut être réalisée en acier.
- dans un autre mode de réalisation il peut comprendre une grille auxiliaire de protection destinée à être solidarisée à une partie supérieure de la structure du véhicule et solidarisée fixement à une partie intermédiaire de la grille principale de protection en étant inclinée par rapport à cette dernière, et augmentant une capacité d'encaissement d'énergie de collision de la grille principale de protection ;
   > la grille auxiliaire de protection peut être réalisée en acier ;
      - il peut comprendre deux pattes de renfort ayant leurs extrémités avant solidarisées fixement à l'extrémité supérieure de la grille auxiliaire de protection, respectivement au voisinage de deux côtés latéraux ;

L'invention propose également un véhicule, éventuellement de type utilitaire, et comprenant, d'une part, une structure délimitant un espace arrière et un espace avant comportant au moins un siège, et, d'autre part, au moins un dispositif de protection du type de celui présenté ci-avant et solidarisé à cette structure transversalement derrière le siège, à une interface entre les espaces arrière et avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, un exemple de véhicule utilitaire équipé d'un exemple de réalisation d'un dispositif de protection selon l'invention,
[Fig. 2] illustre schématiquement, dans une vue en perspective du côté avant, une partie d'un exemple de réalisation d'un dispositif de protection selon l'invention, avant son installation dans un véhicule utilitaire du type de celui illustré sur la figure 1,
[Fig. 3] illustre schématiquement, dans une vue de côté, une petite partie du dispositif de protection de la figure 2, et
[Fig. 4] illustre schématiquement, dans une vue en perspective du dessus, une petite partie du dispositif de protection de la figure 2.

### Description détaillée de l'invention

L'invention a notamment pour but de proposer un dispositif de protection 1 destiné à équiper un véhicule 2 comprenant une structure 3 délimitant un espace arrière 4 et un espace avant 5 comportant au moins un siège, à l'interface entre ces espaces arrière 4 et avant 5 qui se prolongent mutuellement.

Il est rappelé que l'on entend ici par « espace avant » un espace 5 logeant au moins un siège (par exemple de rang un ou deux), et par « espace arrière » un espace 4 qui prolonge l'espace avant 5 vers l'arrière du véhicule 2 et destiné à loger au moins un objet. L'espace avant 5 est dédié au transport de personnes, tandis que l'espace arrière 4 est un espace fonctionnel (éventuellement de travail) ou un espace de rangement.

On considère dans ce qui suit, à titre d'exemple illustratif, que le véhicule 2 est de type utilitaire. Mais l'invention n'est pas limitée à ce type de véhicule terrestre. Elle concerne en effet tout type de véhicule terrestre ayant une structure délimitant un espace arrière et un espace avant logeant au moins un siège. Par conséquent, l'invention concerne également les véhicules de type monospace, les véhicules de type métis (ou crossover), et les véhicules de loisir bicorps (ou SUV).

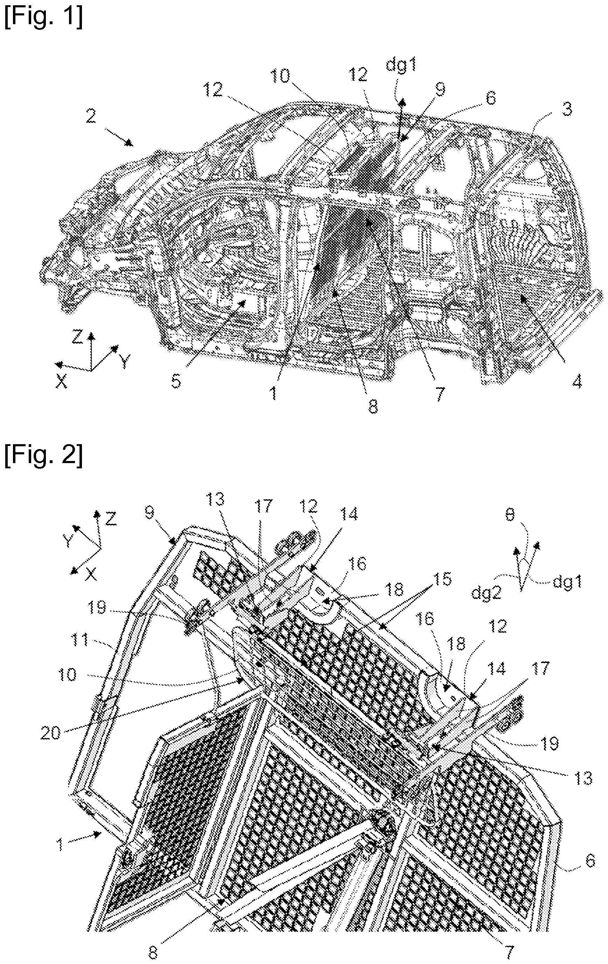

Sur les figures 1 à 4 la direction X est la direction longitudinale du véhicule 2, laquelle est sensiblement parallèle aux côtés latéraux comportant les portes latérales, la direction Y est la direction transversale du véhicule 2, laquelle est perpendiculaire à la direction X, et la direction Z est la direction verticale du véhicule 2, laquelle est perpendiculaire aux directions longitudinale X et transversale Y.

On a schématiquement illustré sur la figure 1, un exemple de véhicule 2 (ici utilitaire) équipé d'un dispositif de protection 1 selon l'invention. Ce véhicule 2 comprend une structure 3, par exemple métallique, et délimitant un espace arrière 4 et un espace avant 5 qui se prolongent mutuellement. L'espace avant 5 comprend au moins un siège (non représenté) pour l'accueil d'au moins un passager.

On notera que dans l'exemple illustré sur la figure 1 les espaces arrière 4 et avant 5 sont apparents car la peau externe en tôles de la structure 3 n'a pas encore été solidarisée fixement à la doublure interne (visible) de cette structure 3.

Comme illustré sur les figures 1 et 2, un dispositif de protection 1, selon l'invention, comprend au moins une grille principale de protection 6 installée transversalement à l'intérieur de la structure 3, à l'interface entre les espaces arrière 4 et avant 5, et par exemple réalisée en acier.

On entend ici par « installé transversalement », le fait d'être installé parallèlement à la direction transversale Y du véhicule 2.

Afin de limiter le poids de cette grille principale de protection 6, elle peut comprendre un cadre 11 auquel est solidarisé un maillage, comme illustré non limitativement sur les figures 2 à 4. Elle peut aussi, éventuellement et comme illustré, comprendre des barres de renfort (préférentiellement plates), par exemple à l'interface entre ses parties intermédiaire 7 et supérieure 9.

Cette grille principale de protection 6 est destinée à être solidarisée à la structure 3 transversalement derrière le(s) siège(s) qui est (sont) installé(s) juste devant dans l'espace avant 5. On notera que cette solidarisation peut être définitive (et donc en un endroit prédéfini) ou temporaire (et donc en un endroit qui est choisi en fonction des besoins), comme on le verra plus loin.

De plus, cette grille principale de protection 6 comprend une partie intermédiaire 7 prolongée vers le bas et vers le haut respectivement par des parties inférieure 8 et supérieure 9.

En outre, cette grille principale de protection 6 est destinée à être installée dans une position inclinée vers l'arrière du véhicule 2 par rapport à la direction verticale Z du véhicule 2 en ayant sa partie inférieure 8 plus proche du siège (de la partie avant 5) que sa partie supérieure 9, afin de réduire l'énergie à encaisser en cas de collision entre elle (6) et un objet, logé dans l'espace arrière 4. La plus grande partie de la grille principale de protection 6 est donc contenue dans un plan incliné Ydg1, défini à partir de la direction transversale Y et d'une direction dg1 qui fait un angle θ avec la direction verticale Z du véhicule 2.

Cet angle θ d'inclinaison entre la direction verticale Z et la direction dg1, est de préférence compris entre environ 5° et environ 20°. Ainsi, cet angle θ peut, par exemple, être égal à 15°.

Cette inclinaison vers l'arrière de la grille principale de protection 6 permet avantageusement à cette dernière (6) d'encaisser des chocs plus importants avec des objets, en particulier lorsque les trajectoires de ces derniers se font sensiblement dans un plan horizontal XY, car l'énergie à encaisser dans le plan incliné Ydg1 est inférieure à celle que l'on aurait dans le plan YZ en raison de l'effet de projection. En outre, cette inclinaison permet avantageusement de réorienter la trajectoire de l'objet vers le bas. Ainsi, à iso résistance la grille principale de protection 6 inclinée peut encaisser des collisions avec des objets plus lourds et/ou ayant une vitesse d'impact plus importante qu'une grille de protection sensiblement verticale.

Comme illustré non limitativement sur les figures 1 à 4, le dispositif de protection 1 peut également comprendre une grille auxiliaire de protection 10 destinée à être solidarisée à une partie supérieure de la structure 3, par exemple au niveau du toit (ou pavillon), et solidarisée fixement à la partie intermédiaire 7 de la grille principale de protection 6 en étant inclinée par rapport à cette dernière (6). Cette grille auxiliaire de protection 10 est agencée de manière à augmenter la capacité d'encaissement d'énergie de collision de la grille principale de protection 6, principalement dans la partie supérieure au voisinage du toit.

Comme illustré sur les figures 2 à 4, la grille auxiliaire de protection 10 est solidarisée fixement par son extrémité inférieure 20 à la grille principale de protection 6, de préférence par soudage. Mais cette solidarisation pourrait aussi se faire par vissage.

Cette grille auxiliaire de protection 10 peut, par exemple, être réalisée en acier. Afin de limiter le poids de cette grille auxiliaire de protection 10, elle peut comprendre un cadre auquel est solidarisé un maillage, comme illustré non limitativement sur les figures 2 à 4.

On notera que dans l'exemple illustré non limitativement sur les figures 1 à 4 la grille auxiliaire de protection 10 est installée transversalement dans un plan dg2Y qui est parallèle au plan vertical YZ. Par conséquent, l'angle entre la grille auxiliaire de protection 10 et la grille principale de protection 6 est égal à l'angle θ mentionné plus haut. Mais cet angle entre la grille auxiliaire de protection 10 et la grille principale de protection 6 pourrait être différent de l'angle θ. Dans ce cas, la direction dg2, qui participe avec la direction transversale Y à la définition du plan dg2Y contenant l'essentiel de la grille auxiliaire de protection 10, n'est pas parallèle à la direction verticale Z.

On notera également, comme illustré non limitativement sur les figures 1 à 4, qu'en complément de la grille auxiliaire de protection 10 le dispositif de protection 1 peut également comprendre au moins une patte de renfort 12 comportant des extrémités avant 13 et arrière 14 qui sont solidarisées fixement et respectivement à des extrémités supérieures 15 de la grille auxiliaire de protection 10 et de la grille principale de protection 6. Chaque patte de renfort 12 est agencée de manière à encaisser par déformation une partie de l'énergie d'une collision entre un objet et la grille principale de protection 6. On comprendra en effet qu'en raison de l'inclinaison de la grille principale de protection 6, lorsqu'un objet la percute elle se déforme vers l'avant (par enfoncement) mais cette déformation est atténuée (ou amortie) par la déformation de chaque patte de renfort 12.

On notera que dans l'exemple illustré sur les figures 1 à 4 le dispositif de protection 1 comprend deux pattes de renfort 12 ayant leurs extrémités avant 13 solidarisées fixement à l'extrémité supérieure 15 de la grille auxiliaire de protection 10, respectivement au voisinage de deux côtés latéraux. Mais le dispositif de protection 1 pourrait comprendre une unique patte de renfort 12 installée en position médiane, ou bien plus de deux pattes de renfort 12, et par exemple trois (deux au voisinage des deux côtés latéraux et une en position médiane).

Dans une variante de réalisation non illustrée, le dispositif de protection 1 pourrait ne pas comprendre de grille auxiliaire de protection 10, mais au moins une patte de renfort 12 agencée de manière à encaisser par déformation une partie de l'énergie d'une collision entre un objet et la grille principale de protection 6. Dans ce cas, chaque patte de renfort 12 comprend une extrémité avant 13 destinée à être solidarisée à une partie supérieure de la structure 3 du véhicule 2 (par exemple le toit) et une extrémité arrière 14 solidarisée fixement à l'extrémité supérieure 15 de la grille principale de protection 6.

Dans cette variante, comme dans l'exemple décrit ci-avant, le dispositif de protection 1 peut aussi comprendre deux pattes de renfort 12 ayant leurs extrémités avant 13 destinées à être solidarisées à la partie supérieure de la structure 3 de façon symétrique par rapport à la direction longitudinale médiane du véhicule 2. Mais le dispositif de protection 1 pourrait comprendre une unique patte de renfort 12 installée en position médiane, ou bien plus de deux pattes de renfort 12, et par exemple trois réparties entre les deux côtés latéraux du véhicule V.

Dans l'exemple illustré, comme dans la variante décrite ci-avant, chaque patte de renfort 12 peut, comme illustré non limitativement sur les figures 2 à 4, comprendre une plaque transversale 16 et deux plaques longitudinales 17. La plaque transversale 16 est destinée à être installée dans un plan transversal XY du véhicule 2 et participe à l'extrémité arrière 14 de sa patte de renfort 12. Les deux plaques longitudinales 17 sont destinées à être installées parallèlement dans deux plans longitudinaux XZ du véhicule 2 et comprennent chacune une première extrémité solidarisée à la plaque transversale 16 et une seconde extrémité participant à l'extrémité avant 13 de sa patte de renfort 12.

Par exemple, la plaque transversale 16 et les deux plaques longitudinales 17 de chaque patte de renfort 12 peuvent être solidarisées entre elles par soudage. Mais dans une variante de réalisation chaque patte de renfort 12 pourrait être réalisée par moulage.

Egalement par exemple, et comme illustré non limitativement sur les figures 2 à 4, la partie supérieure 9 de la grille principale de protection 6 peut comprendre au niveau de son extrémité supérieure 15 au moins un décrochement 18 vers le bas dans lequel est solidarisée la plaque transversale 16 d'une patte de renfort 12. En présence de deux pattes de renfort 12, l'extrémité supérieure 15 de la partie supérieure 9 de la grille principale de protection 6 comprend deux décrochements 18, comme illustré non limitativement sur la figure 2.

On notera également que chaque patte de renfort 12 doit être à la fois rigide et déformable. Par conséquent, chaque patte de renfort 12 peut, par exemple, être réalisée en acier.

On notera également, comme illustré non limitativement sur les figures 1 à 4, que l'on peut solidariser à chaque patte de renfort 12 une patte de guidage 19 destinée à permettre le guidage de l'extrémité supérieure 15 de la grille principale de protection 6 par rapport à la face interne du toit du véhicule 2 lorsque l'on veut translater le dispositif de protection 1 suivant la direction longitudinale X. Une telle translation permet de positionner le dispositif de protection 1 où l'on veut ou en certains endroits prédéfinis, afin de faire varier les longueurs complémentaires et modulables des espaces avant 5 et arrière 4 en fonction des besoins.

Afin de faciliter le guidage en translation, chaque patte de guidage 19 peut comporter plusieurs (au moins deux) roulettes placées au voisinage de ses deux extrémités opposées qui prolongent vers l'avant et vers l'arrière une partie centrale qui est solidarisée fixement à la patte de renfort 12 associée, comme illustré non limitativement sur les figures 2 à 4.

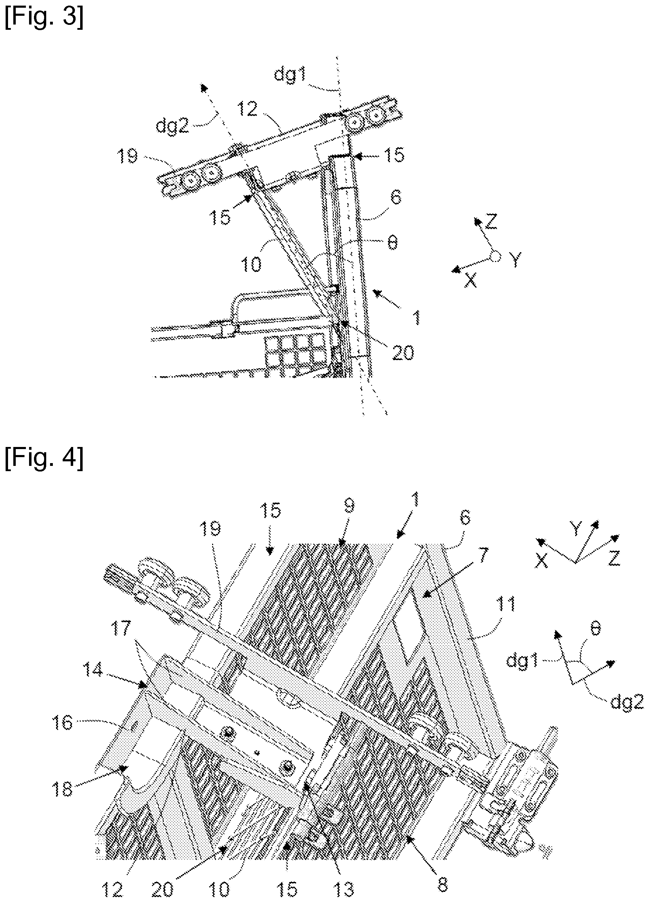

La solidarisation de la patte de guidage 19 à la patte de renfort 12 associée peut se faire par vissage (comme illustré sur la figure 4) ou par soudage.

On notera également que les moyens de solidarisation, qui permettent de solidariser le dispositif de protection 1 à la structure 3, peuvent varier selon que le dispositif de protection 1 est translatable ou non translatable. Par conséquent, ces moyens de solidarisation peuvent être des soudures ou des boulons ou encore des crochets.

## Revendications

1. Dispositif de protection (1) pour un véhicule (2), ledit véhicule (2) comprenant une structure (3) délimitant un espace arrière (4) et un espace avant (5) comportant au moins un siège, ledit dispositif (1) comprenant une grille principale de protection (6) destinée à être solidarisée à ladite structure (3) transversalement derrière ledit siège, à une interface entre lesdits espaces arrière (4) et avant (5), ladite grille principale de protection (6) étant destinée à être installée dans une position inclinée vers l'arrière dudit véhicule (2) par rapport à une direction verticale dudit véhicule (2) en ayant une partie inférieure (8) plus proche dudit siège qu'une partie supérieure (9), afin de réduire l'énergie à encaisser en cas de collision entre un objet, logé dans ledit espace arrière (4), et ladite grille principale de protection (6), **caractérisé en ce que** le dispositif (1) comprend au moins une patte de renfort (12) comprenant une extrémité avant (13) destinée à être solidarisée à une partie supérieure de ladite structure (3) et une extrémité arrière (14) solidarisée fixement à une extrémité supérieure (15) de ladite grille principale de protection (6), et propre à encaisser par déformation une partie de l'énergie de ladite collision

2. Dispositif selon la revendication 1, **caractérisé en ce qu'**il comprend deux pattes de renfort (12) ayant leurs extrémités avant (13) destinées à être solidarisées à ladite partie supérieure de la structure (3) de façon symétrique par rapport à une direction longitudinale médiane dudit véhicule (2).

3. Dispositif selon l'une des revendications 1 à 2, **caractérisé en ce qu'**il comprend une grille auxiliaire de protection (10) destinée à être solidarisée à une partie supérieure de ladite structure (3) et solidarisée fixement à une partie intermédiaire (7) de ladite grille principale de protection (6) en étant inclinée par rapport à cette dernière (6), et augmentant une capacité d'encaissement d'énergie de collision de ladite grille principale de protection (6), les deux patte de renfort (12) comprenant des extrémités avant (13) et arrière (14) solidarisées fixement et respectivement à des extrémités supérieures (15) desdites grille auxiliaire de protection (6) et grille principale de protection (10), et propre à encaisser par déformation une partie de l'énergie de ladite collision, et chaque patte de renfort (12) comprenant en outre une plaque transversale (16) destinée à être installée dans un plan transversal dudit véhicule (2) et participant à son extrémité arrière (14), et deux plaques longitudinales (17) destinées à être installées parallèlement dans deux plans longitudinaux dudit véhicule (2) et comprenant chacune une première extrémité solidarisée à ladite plaque transversale (16) et une seconde extrémité participant à son extrémité avant (13).

4. Dispositif selon la revendication 3, **caractérisé en ce qu'**il comprend deux pattes de renfort (12) ayant leurs extrémités avant (13) solidarisées fixement à ladite extrémité supérieure de la grille auxiliaire de protection (10), respectivement au voisinage de deux côtés latéraux

5. Dispositif selon l'une des revendications 3 ou 4, **caractérisé en ce que** ladite partie supérieure (9) de la grille principale de protection (6) comprend au niveau d'une extrémité supérieure (15) au moins un décrochement (18) vers le bas dans lequel est solidarisée ladite plaque transversale (16).

6. Véhicule (2) comprenant une structure (3) délimitant un espace arrière (4) et un espace avant (5) comportant au moins un siège, **caractérisé en ce qu'**il comprend en outre au moins un dispositif de protection (1) selon l'une des revendications précédentes, solidarisé à ladite structure (2) transversalement derrière ledit siège, à une interface entre lesdits espaces arrière (4) et avant (5).

7. Véhicule selon la revendication 6, **caractérisé en ce qu'**il est de type utilitaire.

## Patentansprüche

1. Schutzvorrichtung (1) für ein Fahrzeug (2), wobei das Fahrzeug (2) eine Struktur (3) umfasst, die einen hinteren Raum (4) und einen vorderen Raum (5) mit mindestens einem Sitz begrenzt, wobei die Vorrichtung (1) ein Hauptschutzgitter (6) umfasst, das an der Struktur (3) quer hinter dem Sitz an einer Schnittstelle zwischen dem hinteren Raum (4) und dem vorderen Raum (5) befestigt werden soll, wobei das Hauptschutzgitter (6) in einer Position angebracht werden soll, die in Bezug auf eine vertikale Richtung des Fahrzeugs (2) nach hinten geneigt ist, wobei ein unterer Teil (8) näher zu dem Sitz als ein oberer Teil (9) ist (1) zur Verringerung der Energie, die bei einer Kollision zwischen einem in dem hinteren Raum (4) untergebrachten Gegenstand und dem Hauptschutzgitter (6) einzunehmen ist, **dadurch gekennzeichnet, dass** die Vorrichtung (1) mindestens eine Verstärkungslasche (12) umfasst, die ein vorderes Ende (13), das mit einem oberen Teil der Struktur (3) fest verbunden werden soll, und ein hinteres Ende (14) umfasst, das fest mit einem oberen Ende (15) des Hauptschutzgitters (6) verbunden ist und geeignet ist, durch Verformung einen Teil der Energie der Kollision einzunehmen

2. Vorrichtung nach Anspruch 1, **dadurch gekennzeichnet, dass** sie zwei Verstärkungslaschen (12) umfasst, deren vordere Enden (13) dazu bestimmt sind, symmetrisch in Bezug auf eine mittlere Längsrichtung des Fahrzeugs (2) mit dem oberen Teil der Struktur (3) verbunden zu werden.

3. Vorrichtung nach einem der Ansprüche 1 bis 2, **dadurch gekennzeichnet, dass** sie ein Hilfs-Schutzgitter (10) umfasst, das dazu bestimmt ist, mit einem oberen Teil der Struktur (3) fest verbunden und mit einem mittleren Teil (7) des Haupt-Schutzgitters (6) fest verbunden zu sein, wobei es in Bezug auf dieses letztere (6) geneigt ist und eine Kapazität zur Aufnahme von Aufprallenergie des Haupt-Schutzgitters (6) erhöht, wobei die beiden Verstärkungslaschen (12) vordere (13) und hintere (14) Enden umfassen, die fest und jeweils mit den oberen Enden (15) des Gitters verbunden sind Schutzhilfsmittel (6) und Hauptschutzgitter (10), das geeignet ist, durch Verformung einen Teil der Energie der Kollision aufzunehmen, und jede Verstärkungslasche (12) ferner eine Querplatte (16), die in einer Querebene des Fahrzeugs (2) angebracht werden soll und an ihrem hinteren Ende (14) beteiligt ist, und zwei Längsplatten (17), die parallel in zwei Längsebenen des Fahrzeugs (2) angebracht werden sollen, umfasst, und jede ein erstes Ende, das mit der Querplatte (16) verbunden ist, und ein zweites Ende, das an ihrem vorderen Ende (13) beteiligt ist, umfasst.

4. Vorrichtung nach Anspruch 3, **dadurch gekennzeichnet, dass** sie zwei Verstärkungslaschen (12) umfasst, deren vordere Enden (13) fest mit dem oberen Ende des zusätzlichen Schutzgitters (10) verbunden sind, jeweils in der Nähe von zwei Seitenseiten

5. Vorrichtung nach einem der Ansprüche 3 oder 4, **dadurch gekennzeichnet, dass** der obere Teil (9) des Haupt-Schutzgitters (6) an einem oberen Ende (15) mindestens einen Absatz (18) nach unten aufweist, in dem die Querplatte (16) befestigt ist.

6. Fahrzeug (2) mit einer Struktur (3), die einen hinteren Raum (4) und einen vorderen Raum (5) begrenzt, der mindestens einen Sitz aufweist, **dadurch gekennzeichnet, dass** es ferner mindestens eine Schutzvorrichtung (1) nach einem der vorhergehenden Ansprüche aufweist, die mit der Struktur (2) quer hinter dem Sitz an einer Schnittstelle zwischen dem hinteren Raum (4) und dem vorderen Raum (5) fest verbunden ist.

7. Fahrzeug nach Anspruch 6, **dadurch gekennzeichnet, dass** es vom Nutzfahrzeugtyp ist.

## Claims

1. Protective device (1) for a vehicle (2), said vehicle (2) comprising a structure (3) delimiting a rear space (4) and a front space (5) comprising at least one seat, said device (1) comprising a main protective grille (6) intended to be secured to said structure (3) transversely behind said seat, at an interface between said rear (4) and front (5) spaces, said main protective grille (6) being intended to be installed in a position inclined towards the rear of said vehicle (2) with respect to a vertical direction of said vehicle (2) by having a lower part (8) closer to said seat than an upper part (9) in order to reduce the energy to be absorbed in the event of a collision between an object housed in said rear space (4) and said main protective grid (6), **characterized in that** the device (1) comprises at least one reinforcing tab (12) comprising a front end (13) intended to be secured to an upper part of said structure (3) and a rear end (14) fixedly secured to an upper end (15) of said main protective grid (6), and capable of absorbing by deformation a part of the energy of said collision

2. Device according to claim 1, **characterized in that** it comprises two reinforcing tabs (12) having their front ends (13) intended to be joined to the said upper part of the structure (3) symmetrically with respect to a median longitudinal direction of the said vehicle (2).

3. Device according to one of claims 1 to 2, **characterized in that** it comprises an auxiliary protective grille (10) intended to be secured to an upper part of the said structure (3) and fixedly secured to an intermediate part (7) of the said main protective grille (6) while being inclined with respect to the latter (6), and increasing a collision energy collection capacity of the said main protective grille (6), the two reinforcing tabs (12) comprising front (13) and rear (14) ends fixedly secured and respectively to upper ends (15) of the said auxiliary protective grille (6) and main protective grid (10), and capable of absorbing by deformation a part of the energy of said collision, and each reinforcing tab (12) further comprising a transverse plate (16) intended to be installed in a transverse plane of said vehicle (2) and participating at its rear end (14), and two longitudinal plates (17) intended to be installed parallel in two longitudinal planes of said vehicle (2) and each comprising a first end secured to said transverse plate (16) and a second end participating at its front end (13).

4. Device according to claim 3, **characterized in that** it comprises two reinforcing tabs (12) having their front ends (13) fixedly attached to the said upper end of the auxiliary protection grid (10), respectively in the vicinity of two lateral sides.

5. Device according to either claims 3 and 4, **characterized in that** the said upper part (9) of the main protective grille (6) comprises, at an upper end (15), at least one downward step (18) in which the said transverse plate (16) is secured.

6. Vehicle (2) comprising a structure (3) delimiting a rear space (4) and a front space (5) comprising at least one seat, **characterized in that** it further comprises at least one protection device (1) according to one of the preceding claims, secured to said structure (2) transversely behind said seat, at an interface between said rear (4) and front (5) spaces.

7. Vehicle according to claim 6, **characterized in that** it is of the utility type.
